# EUROPEAN PATENT SPECIFICATION

(11) **EP 3 967 727 B1**
(45) Date of publication and mention of the grant of the patent: **06.05.2026**
(21) Application number: 19928046.2
(22) Date of filing: 26.12.2019
(51) Int. Cl.: B29B 9/12, C08L 23/06, C08L 23/08, C08L 83/04, C08K 13/02, C08K 3/22, C08K 3/34, C08K 3/32, C08K 3/04, B41M 5/00, B29C 48/92, B29B 7/00, B29B 7/88

(54) **HIGH-EFFICIENT LASER MARKING MATERIAL AND PREPARATION METHOD THEREFOR**
HOCHEFFIZIENTES LASERMARKIERUNGSMATERIAL UND HERSTELLUNGSVERFAHREN DAFÜR
MATÉRIAU DE MARQUAGE LASER HAUTEMENT EFFICACE ET SON PROCÉDÉ DE PRÉPARATION

(30) Priority: 09.05.2019 CN 201910384343
(43) Date of publication of application: 16.03.2022
(73) Proprietor: Jiangsu Zhongtian Technology Co., Ltd., Nantong, Jiangsu 226463 (CN)
(72) Inventor: MIAO, Fei, Nantong, Jiangsu 226463 (CN); ZHU, Jiong, Nantong, Jiangsu 226463 (CN); ZHAO, Xueguang, Nantong, Jiangsu 226463 (CN); GUAN, Chengfei, Nantong, Jiangsu 226463 (CN); ZHAO, Jing, Nantong, Jiangsu 226463 (CN)
(74) Representative: Zaboliene, Reda
(86) International application number: PCT/CN2019/128876
(87) International publication number: WO 2020/224272

(56) References cited:
- EP-A1- 2 533 981
- WO-A1-2018/130972
- CN-A- 101 418 091
- CN-A- 102 417 646
- CN-A- 103 937 230
- CN-A- 105 330 898
- CN-A- 106 739 058
- CN-A- 107 513 212
- CN-A- 108 004 529
- CN-A- 108 164 793
- CN-A- 110 294 883
- CN-B- 101 230 164
- JP-A- 2010 076 180
- JP-A- 2016 137 719
- US-A1- 2008 124 498
- US-A1- 2016 193 864

## Description

### TECHNICAL FIELD

The disclosure relates to a technical field of materials, and specifically relates to a high-efficiency laser marking material and a preparation method thereof.

### BACKGROUND

In the cabling industry, black PE material is common, and black PE materials can generally be marked with traditional ink jet coding, printing wheel printing, and some other methods. These methods have certain limitations, can significantly affect production requirements.

Compared with traditional printing methods, laser printing technology is energy-saving and environmentally friendly, with high applicability and ability to mark clearly. However, in the process of laser printing on the existing black PE material, defects such as blurred marks, poor contrast, and slow marking speed are likely. This is particularly true in the printing of small-sized cables with small outer diameters and thin wall thicknesses, where illegibility, poor contrast, and very low marking speed are more common. Better materials arerequired for industrial production.

### SUMMARY

The material disclosed, which can be laser-marked with high efficiency ("high-efficiency laser marking material"), achieves the goals of high-speed marking, clear marking, and high contrast. Performance of the wire and cable is not affected, nor is the weather resistance.

The high-efficiency laser marking material disclosed is prepared from raw materials comprising the following mass percentages:

| | |
|---|---|
| HDPE resin | 40 wt% ~ 80 wt%; |
| LLDPE resin | 20 wt% ~ 60 wt%; |
| Laser assistant | 0.3 wt% ~ 1 wt%, the laser assistant is selected from two or more materials |

selected from the group consisting of ferroferric oxide, antimony tin oxide and mica copper phosphate;

| | |
|---|---|
| Lubricant | 0.2 wt% ~ 1 wt%; |
| Antioxidant | 0.3 wt% ~ 0.5 wt%; |
| Light stabilizer | 0.1 wt% ~ 0.6 wt%; |
| Black masterbatch | 0.5 wt% ~ 5 wt%; |
| the sum of the above components being | 100wt%. |

Preferably, the HDPE resin is at 190° C and 2.16 Kg, and a melt flow rate of the HDPE resin is not more than 10.0 g/10 min.

Preferably, the LLDPE resin is at 190°C and 2.16 Kg, and a melt flow rate of the HDPE resin is not more than 2.0 g/10 min.

Preferably, the lubricant is selected from one or more of PE wax, PPA, silicone, PP wax, oleic acid amide, erucic acid amide, stearic acid, and EBS.

Preferably, the antioxidant is selected from one or more of antioxidant 1010, antioxidant 1076, antioxidant 330, antioxidant 168, and antioxidant DLTP.

Preferably, the light stabilizer is selected from one or more of light shielding agents, light absorbers, and radical trapping agents.

Preferably, the light shielding agent is selected from carbon black and/or tin oxide, the light absorber is selected from UV326 and/or UV531, and the free radical trapping agent is selected from Chimassorb UV944.

Preferably, the carbon black content in the high-efficiency laser marking material is not more than 2 wt%; the melt flow rate of the high-efficiency laser marking material is not more than 2.0 g/10 min.

A method for preparing the above-mentioned high-efficiency laser marking material is disclosed, which includes the following steps:
A) mixing HDPE resin and LLDPE resin, and adding laser additives, lubricants, antioxidants, light stabilizers and black masterbatch to mix to obtain a mixture;
B) extruding the mixture into pellets to obtain high-efficiency laser marking materials.

Preferably, a twin-screw extruder is used for the extrusion granulation, and the processing technology of the twin-screw extruder is: the temperature of District 1 is 210-225 °C , the temperature of District 2 is 220-235 °C , the temperature of District 3 is 230-245 °C , the temperature of District 4 is 240~255°C, the temperature of District 5 is 220~235°C, the temperature of District 6 is 230~245°C, the temperature of District 7 is 225~245°C, the temperature of District 8 is 220~235°C, the temperature of District 9 is 215~230°C, and the temperature of District 10 is 195~210°C. The screw speed is 280~350r/min, and the tank temperature is 30~40°C.

Compared with the prior art, the raw materials include the following mass percentages: HDPE resin is 40 wt% ~ 80 wt%; LLDPE resin is 20 wt% ~ 60 wt%. The laser assistant is 0.3 wt% to 1 wt%, and the laser assistant is selected from two or more materials selected from the group consisting of ferroferric oxide, antimony tin oxide and mica copper phosphate; lubricant is 0.2 wt% to 1 wt%; Antioxidant is 0.3 wt%~0.5 wt%; light stabilizer is 0.1 wt%~0.6 wt%; black masterbatch is 0.5 wt%~5 wt%. In the system of formulating the high-efficiency laser marking material provided, the additional amounts of the laser auxiliary agent and the black masterbatch play a leading role in the quality of the printing effect. As the content of laser additives increases and the content of carbon black decreases, the mechanical properties of the material change very little, but the printing effect is significantly improved. In addition, the laser additives improve the absorption of the special wavelengths emitted by the laser onto the black PE material, so that the polymer surface layer is carbonized, and through foaming, the white color appears, which is in sharp contrast with the black PE sheath.

### BRIEF DESCRIPTION OF DRAWING

FIG. 1 is a schematic diagram of a cable structure in one embodiment.
FIG. 2 is a cross-section of the laser-markable material.

### DETAILED DESCRIPTION

The high-efficiency laser marking material is prepared from raw materials including the following mass percentages:

| | |
|---|---|
| HDPE resin | 40 wt% ~ 80 wt%; |
| LLDPE resin | 20 wt% ~ 60 wt%; |
| Laser assistant | 0.3 wt% ~ 1 wt%, the laser assistant is selected from two or more materials |

selected from the group consisting of ferroferric oxide, antimony tin oxide and mica copper phosphate;

| | |
|---|---|
| Lubricant | 0.2 wt% ~ 1 wt%; |
| Antioxidant | 0.3 wt% ~ 0.5 wt%; |
| Light stabilizer | 0.1 wt% ~ 0.6 wt%; |
| Black masterbatch | 0.5 wt% ~ 5 wt%; |

The sum of the above components being 100wt%.

The high-efficiency laser marking material provided in one embodiment includes 40 wt% to 80 wt% of HDPE resin, preferably 50 wt% to 70 wt%, and more preferably 55 wt% to 65 wt%. The melt flow rate of the HDPE resin at 190° C and 2.16 Kg is not more than 10.0 g/10 min.

The HDPE is selected from one or more mixtures of HDPE with low melting index and HDPE resin with high melting index. The HDPE resin with low melting index has a melt flow rate of not more than 2.0 g at 190°C and 2.16 Kg /10min. Preferably, the melt flow rate of the HDPE resin of the low melting index is not greater than 1.0 g/10 min. The HDPE resin with low melting index is selected from one or more blended materials of 7000F, FB1350, HDPE3363, HDPE00952 and HDPE041. The HDPE resin with hight melting index has a melt flow rate of not more than 20.0 g/10min at 190°C and 2.16 Kg. Preferably, the melt flow rate of the HDPE resin with high melting index is not greater than 10.0 g/10 min. The HDPE resin with high melting index is selected from one or more blended materials among HDPE (FMA026), HDPE8008, and HDPE (FMA025).

The high-efficiency laser marking material also includes 20 wt% to 60 wt% of LLDPE resin, preferably 30 wt% to 50 wt%, and more specifically 35 wt% to 45 wt%. The melt flow rate of the LLDPE resin at 190° C and 2.16 Kg is not more than 2.0 g/10 min. Preferably, the melt flow rate of the LLDPE resin is not greater than 1.0 g/10 min. The LLDPE resin mainly includes one or several blended materials of LLDPE7042, LLDPE (FB2230), and LLDPE (FK1820).

In order to adapt to various specifications of wires and cables, laser-markable materials need very superior processing and extrusion performance. The selection and ratios of HDPE resin and LLDPE resin are very important. In the selection of HDPE resin, in addition to HDPE resin with low melting index, a certain proportion of HDPE resin with high melting index plays a role in promoting the processing flow and extrusion performance of the entire system of formulation. At the same time, the selection and processing performance of LLDPE resin is superior. The bimodal LLDPE is modified and granulated by lubricant, which makes a better processing performance of the finished product.

The high-efficiency laser marking material also includes 0.3 wt% to 1 wt% of laser assistant, preferably 0.4 wt% to 0.9 wt%, and more preferably 0.5 wt% to 0.8 wt%. The laser assistant is selected from two or more materials selected from the group consisting of triiron tetroxide, antimony tin oxide, and mica copper phosphate. The laser additives mainly include two or more blended materials from Merck's Iriotec 8835, Merck's Iriotec 8815, and Qirun's laser engraving aid HZ-889A, and Hannuo Materials Laser Marking Masterbatch 0896-05FT-02.

The laser additives improve the absorption of the special wavelengths emitted by the laser onto the black PE material, so that the polymer surface layer is carbonized, and through foaming, the white color appears, which is in sharp contrast with the black PE sheath.

The high-efficiency laser marking material further includes 0.2 wt% to 1 wt% of lubricant, preferably 0.4 wt% to 0.8 wt%, and more preferably 0.5 wt% to 0.7 wt%. The lubricant is selected from one or more of PE wax, PPA, silicone, PP wax, oleic acid amide, erucic acid amide, stearic acid, and EBS. The lubricant mainly includes one of or a mixture of PE wax, PPA, silicone, PP wax, oleic acid amide, erucic acid amide, stearic acid, and EBS.

The high-efficiency laser marking material further includes an antioxidant of 0.3 wt% to 0.5 wt%, preferably 0.35 wt% to 0.45 wt%, and more preferably 0.37 wt% to 0.0.42 wt%. The antioxidant is selected from one or more of antioxidant 1010, antioxidant 1076, antioxidant 330, antioxidant 168, and antioxidant DLTP.

The high-efficiency laser marking material further includes a light stabilizer of 0.1 wt% to 0.6 wt%, preferably 0.2 wt% to 0.5 wt%, and more preferably 0.3 wt% to 0.4 wt%. The light stabilizer is selected from one or more of light shielding agents, light absorbers, and radical trapping agents. The light shielding agent is selected from carbon black and/or tin oxide, the light absorber is selected from UV326 and/or UV531, and the free radical trapping agent is Chimassorb UV944.

The high-efficiency laser marking material also includes 0.5 wt% to 5 wt% of black masterbatch, preferably 1.0 wt% to 4.5 wt%, and more preferably 2.0 wt% to 4.0 wt%. The black masterbatch mainly includes one or a blend of Cabot's PE2762 and Cabot's PE2014.

The additional amounts of the laser assistant and the black masterbatch in the formula system play a leading role in the quality of the printing. As the content of laser additives increases and the content of carbon black decreases, the mechanical properties of the material are not significantly changed, but the effects of laser printing are significantly improved.

In addition, this material for cable has good weather resistance and a long service life. The addition of antioxidants, light stabilizers and black color masterbatch provides light shielding ability, light absorption, and free radical capture to ensure the safe and lengthy outdoor use time of the finished cable.

The high-efficiency laser marking material contains a certain amount of carbon black, and the source of the carbon black is the carbon black in the light stabilizer in the formula and/or the black masterbatch, which is converted into a product with a carbon black content of not more than 2 wt%.

The melt flow rate of the high-efficiency laser marking material is not greater than 2.0 g/10 min. Preferably, the melt flow rate of the high-efficiency laser marking material is not greater than 2.0 g/10 min.

A method for preparing the above-mentioned high-efficiency laser marking material includes the following steps:
A) mixing HDPE resin and LLDPE resin, and adding laser additives, lubricants, antioxidants, light stabilizers and black masterbatch to mix to obtain a mixture;
B) extruding the mixture into pellets to obtain high-efficiency laser marking materials.

In the method, the HDPE resin and the LLDPE resin are mixed first. The mixing method does not have any special restrictions, any mixing method known to those skilled in the art can be used. In the disclosed method, it is preferable to mix according to the following method:

Putting HDPE resin and LLDPE resin into a vertically reciprocating agitation device for batch mixing, to obtain a batch-mixed resin;

The batch of mixed resin is placed in a discharge bin and automatically weighed, , and then the batch of mixed resin is placed in a high-speed mixer.

Next, putting the correct weights of laser aids, lubricants, antioxidants, light stabilizers, and black masterbatch into the high-speed mixer.

Then, turn on the high-speed mixer and mix for 60s~300s so that the raw materials are uniformly mixed, to obtain the mixture.

Subsequently, the mixed material is extruded and pelletized to obtain the high-efficiency laser marking material in stock form.

A twin-screw extruder is used for the extrusion granulation, and the processing technology of the twin-screw extruder is: the temperature of District 1 is 210~225°C, the temperature of District 2 is 220-235 °C , the temperature of District 3 is 230-245 °C , the temperature of District 4 is 240~255°C, the temperature of District 5 is 220~235°C, the temperature of District 6 is 230~245°C, the temperature of District 7 is 225-245 °C , the temperature of District 8 is 220-235 °C , the temperature of District 9 is 215~230°C, and the temperature of District 10 is 195~210°C. The screw speed is 280~350r/min, and the tank temperature is 30~40°C.

Finally, the pellets undergo cleaning, cooling, drying, weighing and packaging.

The high-efficiency laser marking material can be applied on the surface of a cable made of black PE material, the structure and specifications of the cable are not restricted. A cable with a black PE outer sheath is well known to those skilled in the art.

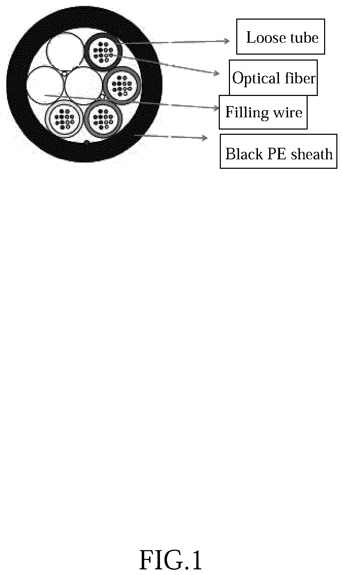

As shown in FIG. 1, the cable includes a black PE sheath, a filling wire, and a loose tube arranged inside the black PE sheath, and the loose tube is filled with optical fiber.

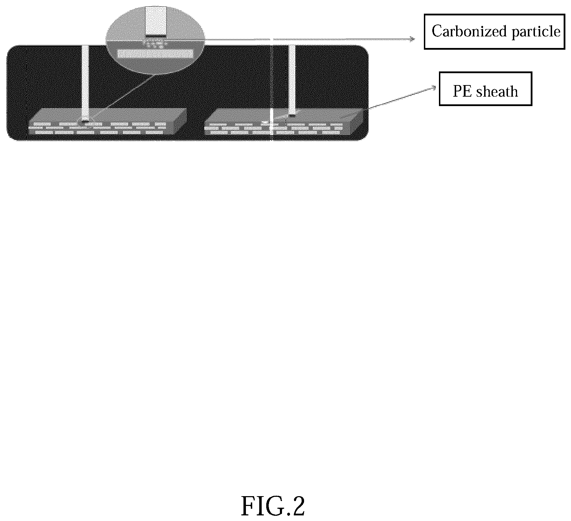

When the applied high-efficiency laser marking material is to be marked, the marking principle is shown in FIG. 2. The laser additives improve the absorption of the special wavelengths emitted onto the black PE material by the laser, so that the polymer surface layer is carbonized, and through foaming, the white color appears, which is in sharp contrast with the black PE sheath.

The high-efficiency laser marking material is suitable for wires and cables of various specifications, with clear printing effect, high contrast, and high production efficiency. The material has superior performance as an exterior surface, good weather resistance, and long service life.

In terms of the clarity of the printing, the additional amounts of the laser additives and black masterbatch in the formula system plays a leading role in the quality of the printing. As the content of laser additives increases and the content of carbon black decreases, the mechanical properties of the material do not change much, but the printing effect is significantly improved.

In order to apply a coating to various specifications of wire and cable and make the material superior in performance, the material is described in detail. If it is necessary to adapt to various specifications of wires and cables, it indicates that the material needs very superior processing and extrusion performance. For this reason, in the formulation system, the selection and ratios of HDPE resin and LLDPE resin are very important. In the selection of HDPE resin, in addition to HDPE with low melt index, a certain proportion of HDPE with high melt index plays a role in promoting the processing flow and extrusion performance of the entire formulation system. At the same time, the LLDPE resin selects bimodal LLDPE with better processing performance, and then passes through the lubricant through modification and granulation, so that the processing performance of the finished product is very superior.

At the same time, in order to ensure good weather resistance and long service life, the addition of antioxidants, light stabilizers, and black color masterbatch play a role in light shielding, light absorption, and free radical capture, ensuring the unrestricted outdoor use of the finished cable.

In order to further understand the present invention, the high-efficiency laser marking material and preparation method disclosed will be described below in conjunction with examples. The scope of protection of the claims herein is not limited by the following examples.

### Examples 1~4:

### 1. The types and amounts of formula are shown in Table 1 and Table 2 respectively

**Table 1-Formulation Type**

| | Example 1 | Example 2 | Example 3 | Example 4 |
|---|---|---|---|---|
| HDPE | Low melting index HDPE 3363 and high melting index HDPE 026 are mixed at a mass ratio of 4:1 | Low melting index HDPE 7000F | Low melting index HDPE 1350 and high melting index HDPE 025 are mixed with a mass ratio of 2:1 | Low melting index HDPE 7000F and high melting index HDPE 026 are mixed at a mass ratio of 1:1 |
| LLDPE | Bimodal LLDPE 2230 and LLDPE 7042 are mixed at a mass ratio of 1:1 | Bimodal LLDPE 2230 and LLDPE 7042 are mixed at a mass ratio of 1:1 | Bimodal LLDPE 2230 and LLDPE 7042 are mixed at a mass ratio of 2:1 | Bimodal LLDPE 2230 and LLDPE 7042 are mixed at a mass ratio of 4:1 |
| Laser additives | Iriotec 8835, Iriotec 8815, and radium carving additives are mixtures with a mass ratio of 2:1:2 | Iriotec8835 | Iriotec 8835, laser carving aids are a mixture of 3:1 mass ratio | Iriotec 8835 and Iriotec 8815 are mixed with a mass ratio of 4:1 |
| Lubricant | PE wax, PPA, and silicone are mixed in a mass ratio of 1:1:2 | PE wax, PPA, and silicone are mixed in a mass ratio of 1:1:2 | PE wax, PPA, and silicone are mixed in a mass ratio of 1:1:2 | PE wax, PPA, and silicone are mixed in a mass ratio of 1:1:2 |
| Antioxidant | A mixture of 1010 and DLTP at a mass ratio of 1:1 | A mixture of 1010 and DLTP at a mass ratio of 1:1 | A mixture of 1010 and DLTP at a mass ratio of 1:1 | A mixture of 1010 and DLTP at a mass ratio of 1:1 |
| Light stabilizer | UV 326, UV 531, UV944 are mixed with a mass ratio of 3:1:2 | UV 326, UV 531, UV944 are mixed with a mass ratio of 4:1:3 | UV 326, UV 531, UV944 are mixed with a mass ratio of 3:1:3 | UV 326, UV944 are mixed with a mass ratio of 1:1 |
| Black masterbatch | PE2762 | PE2014 | PE 2762, PE 2014 are mixed with a mass ratio of 1:1 | PE 2762, PE 2014 are mixed with a mass ratio of 1:1 |

| | | | | |
|---|---|---|---|---|
| Note: The low melting index HDPE contained in the HDPE resin in Table 1 means that the melt flow rate of HDPE resin is not greater than 1.0 g/10min, selected from one or more blended materials among 7000F, FB1350, HDPE3363, HDPE00952 and HDPE041; high melting index HDPE means that the melt flow rate of HDPE resin is not more than 10.0 g/10min, which is selected from one or more blended materials among HDPE (FMA026), HDPE8008, and HDPE (FMA025). The melt flow rate of LLDPE resin is not more than 1.0 g/10min, and it is selected from one or more blended materials among LLDPE7042, LLDPE (FB2230) and LLDPE (FK1820). The laser assistant in the laser assistant is Heqirun HZ-889A. | | | | |

**Table 2-Formula amounts (units: kg)**

| | Example 1 | Example 2 | Example 3 | Example 4 |
|---|---|---|---|---|
| HDPE | 60 | 40 | 80 | 75 |
| LLDPE | 40 | 60 | 20 | 25 |
| Laser additives | 0.1 | 0.4 | 0.5 | 0.8 |
| Lubricant | 0.3 | 0.35 | 0.5 | 0.4 |
| Antioxidant | 0.3 | 0.4 | 0.3 | 0.5 |
| Light stabilizer | 0.4 | 0.4 | 0.4 | 0.4 |
| Black masterbatch | 2 | 1 | 3 | 1 |

### 2. Preparation process

Step One: Scale formulation system, the HDPE resin and the LLDPE resin of correct weight are put into the batch mixing apparatus for mixing.

Step Two: The batch is automatically mixed into the resin well to the discharge bin.

Step Three: Put a certain amount of batch-mixed resin into the high-speed mixer by automatic weighing.

Step four: Put the correct weights of laser additives, lubricants, antioxidants, light stabilizers, and black masterbatch into the high-speed mixer.

Step five: After the materials are mixed in a high-speed mixer for 60 seconds, the materials are uniformly mixed and then poured into a twin-screw extruder for extrusion and granulation.

The twin-screw extrusion process is: the temperature of District 1 is 210°C, the temperature of District 2 is 220°C, the temperature of District 3 is 230°C , the temperature of District 4 is 240°C, the temperature of District 5 is 235°C, the temperature of District 6 is 230°C, the temperature of District 7 is 22°C, the temperature of District 8 is 220°C, the temperature of District 9 is 215°C, the temperature of District 10 is 210°C, screw speed is 280r/min, water tank temperature is 35°C.

Step Six: After pelletizing, cleaning, cooling, drying, weighing, and packaging the high-efficiency laser marking material.

### 3. Performance testing

(1) The coating and sheathing performance of the high-efficiency laser marking materials prepared in Examples 1 to 4 was compared and characterized, and the results are shown in Table 3.

**Table 3-performance of the high-efficiency laser marking materials**

| | Example 1 | Example 2 | Example 3 | Example 4 |
|---|---|---|---|---|
| Tensile strength (MPa) | 33.25 | 32.1 | 30.23 | 34.26 |
| Elongation at break (%) | 800.34 | 810.23 | 750.26 | 798.56 |
| Density (g/cm³) | 0.945 | 0.940 | 0.956 | 0.950 |
| Melt flow rate (g/10min) | 0.35 | 0.2 | 0.48 | 0.88 |
| Resistance to environmental stress cracking time (h) | 1500 | 1000 | 2000 | 3000 |
| Xenon lamp aging | 4000h | | | |
| Tensile strength change rate (%) | 13.2 | 15.2 | 11.25 | 12.3 |
| Change rate of elongation at break (%) | 7.2 | 8.5 | 5.5 | 4.5 |

(2) The laser printing of the high-efficiency laser marking materials prepared in Examples 1 to 4 on small-diameter wires and cables (outer diameter≤2.5mm) was compared and characterized, and the results are shown in Table 4.

**Table 4-Comparison of laser printing of small diameter wires and cables (outer diameter ≤ 2.5mm)**

| | Example 1 | Example 2 | Example 3 | Example 4 |
|---|---|---|---|---|
| Cable pulling speed m/min | 70m/min | 60 m/min | 90m/min | 100m/min |
| Apparent performance | The surface is relatively smooth and shiny | ordinary | The surface is smooth and shiny | The surface is smooth and shiny |
| The effect of printing | Relatively clear | ordinary | Clear | Clear |

(3) The results of laser printing of the high-efficiency laser marking materials prepared in Examples 1 to 4 on the general wire and cable (outer diameter ≥3.0mm) are shown in Table 5.

**Table 5-Comparison of laser printing of general wire and cable (outer diameter ≥3.0mm)**

| | Example 1 | Example 2 | Example 3 | Example 4 |
|---|---|---|---|---|
| Cable pulling speed m/min | 50m/min | 40 m/min | 55m/min | 60m/min |
| Apparent performance | The surface is relatively smooth and shiny | ordinary | The surface is smooth and shiny | The surface is smooth and shiny |
| The effect of printing | Relatively clear | ordinary | Clear | Clear |

(4) In a wiping/scratching/smearing test of coated wires and cables, the results are shown in Table 6.

**Table 6-Effect of wiping/scratching/smearing coated wires and cables**

| | Example 1 | Example 2 | Example 3 | Example 4 |
|---|---|---|---|---|
| Steel needle (4N , 100times) | Printing effect can not be removed | Printing effect can not be removed | Printing effect can not be removed | Printing effect can not be removed |
| Wool felt (10N , 300times) | Printing effect can not be removed | Printing effect can not be removed | Printing effect can not be removed | Printing effect can not be removed |
| 150 wipes with industrial alcohol | Printing effect can not be removed | Printing effect can not be removed | Printing effect can not be removed | Printing effect can not be removed |

### Example 5

Based on the formula and preparation method of Example 4, the amount of raw materials and laser assistant was changed, other conditions being unchanged, the preparation of the high-efficiency laser marking material was carried out. The specific amounts and proportions of the formula are shown in Table 7.

**Table 7-Formula quantities and proportions**

| | Example 4 | Example 4-1 | Example 4-2 | Example 4-3 | Example 4-4 | Example 4-5 |
|---|---|---|---|---|---|---|
| HDPE | 75 | 75 | 75 | 75 | 75 | 75 |
| LLDPE | 25 | 25 | 25 | 25 | 25 | 25 |
| Laser additives | 0.8 | 1 | 1.2 | 1.4 | 0 | 0.8 |
| Lubricant | 0.4 | 0.4 | 0.4 | 0.4 | 0.4 | 0.4 |
| Antioxidant | 0.5 | 0.5 | 0.5 | 0.5 | 0.5 | 0.5 |
| Light stabilizer | 0.4 | 0.4 | 0.4 | 0.4 | 0.4 | 0.4 |
| Black masterbatch | 1 | 0.9 | 0.8 | 0.7 | 1 | 1 |

| | | | | | | |
|---|---|---|---|---|---|---|
| Note: In Table 7, the laser additives in Examples 4, 4-1, 4-2, and 4-3 are selected from Iriotec 8835 and Iriotec 8815 with a 4:1 mass ratio; Example 4-4 does not Add laser auxiliary agent; Example 4-5 selects laser auxiliary agent as Heqirun laser carving auxiliary agent HZ-889A; | | | | | | |

The high-efficiency laser marking material as formulated above was tested, and the results are shown in Table 8.

**Table 8-Coating and sheathing performance of re-formulated high-efficiency laser marking materials**

| | Example 4 | Example 4-1 | Example 4-2 | Example 4-3 | Example 4-4 | Example 4-5 |
|---|---|---|---|---|---|---|
| Tensile strength (MPa) | 34.26 | 34.15 | 33.26 | 34.20 | 34.25 | 34.23 |
| Elongation at break (%) | 798.56 | 790.56 | 792.36 | 795.45 | 786.9 | 790.36 |
| Density (g/cm³) | 0.950 | 0.950 | 0.950 | 0.950 | 0.949 | 0.950 |
| Melt flow rate (g/10min) | 0.69 | 0.70 | 0.69 | 0.71 | 0.68 | 0.69 |
| Resistance to environmental stress cracking time (h) | 3000 | 3000 | 3000 | 3000 | 3000 | 3000 |
| Xenon lamp aging | 4000h | | | | | |
| Tensile strength change rate ( % ) | 12.3 | 12.0 | 11.3 | 11.9 | 11.2 | 11.8 |
| Change rate of elongation at break (%) | 4.5 | 4.3 | 3.9 | 4.2 | 4.2 | 4.3 |

Table 8 shows that the mechanical properties of the product basically do not change when the amounts of the formula are changed.

However, for small wire diameter wires and cables (outer diameter ≤2.5mm), under the condition of cable coating with a line speed of 60-100m/min, the printing effect of Example 4-3 is superior, and the laser-printed font is clearer. Under the test conditions of steel needle (4N, 100 times), wool felt (10N, 300 times) and rubbing with alcohol, the removal of the printing of Example 4-3 is more difficult, and retention of the printing is stronger. However, in Example 4-4, the printing is blurred when no laser additive is added, and the printed fonts can be easily wiped away and removed; Example 4-5 selects the light additives and Qirun laser engraving additives HZ-889A, and the printing is relatively clear, the printed font is not easily wiped and removed. The specific results are shown in Table 9.

**Table 9**

| | Example 4 | Example 4-1 | Example 4-2 |
|---|---|---|---|
| Steel needle ( 4N) | The font is clear, the font remains clear after 100 wipes | The font is clear, the font remains clear after 100 wipes | The font is clear, the font remains clear after 110 wipes |
| Wool felt ( 10N) | The font is clear, the font remains clear after 300 wipes | The font is clear, the font remains clear after 300 wipes | The font is clear, the font remains clear after 310 wipes |
| wipes with industrial alcohol | The font is clear, the font remains clear after 200 wipes | The font is clear, the font remains clear after 220 wipes | The font is clear, the font remains clear after 260 wipes |
| Steel needle ( 4N) | The font is clear, the font remains clear after 120 wipes | The font is blurred, and the printing effect basically disappeared after more than 50 wipes | The font is relatively clear, and the clarity of the font decreases after more than 75 wipes |
| Wool felt ( 10N) | The font is clear, the font remains clear after 330 wipes | The font is blurred, and the printing effect basically disappeared after more than 130 wipes | The font is relatively clear, and the clarity of the font decreases after more than 200 wipes |
| wipes with industrial alcohol | The font is clear, the font remains clear after 200 wipes | The font is blurred, and the printing effect basically disappeared after more than 150 wipes | The font is relatively clear, and the clarity of the font decreases after more than 200 wipes |

The high-efficiency laser marking material is suitable for wires and cables of various specifications, with clear printing, high contrast, and high production efficiency. The material has good performance as an outer surface, good weather resistance, and long service life.

## Claims

1. A high-efficiency laser marking material, **characterized in that**, the high-efficiency laser marking material is prepared from raw materials comprising the following mass percentages:
| | |
|---|---|
| HDPE resin | 40 wt% ~ 80 wt%; |
| LLDPE resin | 20 wt% ~ 60 wt%; |
| Laser assistant | 0.3 wt% ~ 1 wt%, the laser assistant is selected from two or more materials |
| selected from the group consisting of ferroferric oxide and mica copper phosphate; | |
| Lubricant | 0.2 wt% ~ 1 wt%; |
| Antioxidant | 0.3 wt% ~ 0.5 wt%; |
| Light stabilizer | 0.1 wt% ~ 0.6 wt%; |
| Black masterbatch | 0.5 wt% ~ 5 wt%; |
| the sum of the above components being | 100wt%. |

2. The high-efficiency laser marking material as claimed in claim 1, **characterized in that**, the HDPE resin is at 190° C and 2.16 Kg, and a melt flow rate of the HDPE resin is not more than 10.0 g/10 min.

3. The high-efficiency laser marking material as claimed in claim 1, **characterized in that**, the LLDPE resin is at 190°C and 2.16 Kg, and a melt flow rate of the HDPE resin is not more than 2.0 g/10 min.

4. The high-efficiency laser marking material as claimed in claim 1, **characterized in that**, the lubricant is selected from one or more of PE wax, PPA, silicone, PP wax, oleic acid amide, erucic acid amide, stearic acid and EBS.

5. The high-efficiency laser marking material as claimed in claim 1, **characterized in that**, the antioxidant is selected from one or more of antioxidant 1010, antioxidant 1076, antioxidant 330, antioxidant 168 and antioxidant DLTP.

6. The high-efficiency laser marking material as claimed in claim 1, **characterized in that**, the light stabilizer is selected from one or more of light shielding agents, light absorbers and radical trapping agents.

7. The high-efficiency laser marking material as claimed in claim 6, **characterized in that**, the light shielding agent is selected from carbon black and/or tin oxide, the light absorber is selected from UV326 and/or UV531, and the free radical trapping agent is selected from Chimassorb UV944.

8. The high-efficiency laser marking material as claimed in claim 1, **characterized in that**, the carbon black content in the high-efficiency laser marking material is not more than 2 wt%; the melt flow rate of the high-efficiency laser marking material is not more than 2.0 g/10 min.

9. A method for preparing a high-efficiency laser marking material as claimed in claim 1, **characterized in that**, the method comprising the following steps:
A) mixing HDPE resin and LLDPE resin, and adding laser additives, lubricants, antioxidants, light stabilizers and black masterbatch to mix to obtain a mixture;
B) extruding the mixture into pellets to obtain high-efficiency laser marking materials.

10. The method for preparing a high-efficiency laser marking material as claimed in claim 9, **characterized in that**, a twin-screw extruder is used for the extrusion granulation, and a processing technology of the twin-screw extruder comprises: the temperature of District 1 210~225°C in the first zone, the temperature of District 2 220~235°C in the second zone, the temperature of District 3 230~245°C , the temperature of District 4 240~255°C, the temperature of District 5 220~235°C, the temperature of District 6 230~245°C, the temperature of District 7 225~245°C, the temperature of District 8 220~235°C, the temperature of District 9 215~230°C, the temperature of District 10 195~210°C; a screw speed is 280~350r/min, and a tank temperature is 30~40°C.

11. The method for preparing a high-efficiency laser marking material as claimed in claim 8, **characterized in that**, the HDPE resin is at 190° C and 2.16 Kg, and a melt flow rate of the HDPE resin is not more than 10.0 g/10 min.

12. The method for preparing a high-efficiency laser marking material as claimed in claim 8, **characterized in that**, the LLDPE resin is at 190°C and 2.16 Kg, and a melt flow rate of the HDPE resin is not more than 2.0 g/10 min.

13. The method for preparing a high-efficiency laser marking material as claimed in claim 8, **characterized in that**, the lubricant is selected from one or more of PE wax, PPA, silicone, PP wax, oleic acid amide, erucic acid amide, stearic acid and EBS.

14. The method for preparing a high-efficiency laser marking material as claimed in claim 8, **characterized in that**, the antioxidant is selected from one or more of antioxidant 1010, antioxidant 1076, antioxidant 330, antioxidant 168 and antioxidant DLTP.

15. The method for preparing a high-efficiency laser marking material as claimed in claim 8, **characterized in that**, the light stabilizer is selected from one or more of light shielding agents, light absorbers and radical trapping agents, the light shielding agent is selected from carbon black and/or tin oxide, the light absorber is selected from UV326 and/or UV531, and the free radical trapping agent is selected from Chimassorb UV944.

## Patentansprüche

1. Ein hocheffizientes Lasermarkierungsmaterial, **dadurch gekennzeichnet, dass** das hocheffiziente Lasermarkierungsmaterial aus Rohstoffen hergestellt ist, die die folgenden Massenprozentsätze umfassen:
| | |
|---|---|
| HDPE-Harz | 40 Gew.-% ~ 80 Gew.-%; |
| LLDPE-Harz | 20 Gew.-% ~ 60 Gew.-%; |
| Laserhilfsmittel | 0.3 Gew.-% ~ 1 Gew.-%, |
wobei das Laserhilfsmittel aus zwei oder mehr Materialien ausgewählt ist, die aus der Gruppe bestehend aus Eisen(II,III)-oxid und Glimmer-Kupferphosphat ausgewählt sind;
| | |
|---|---|
| Schmiermittel | 0.2 Gew.-% ~ 1 Gew.-%; |
| Antioxidans | 0.3 Gew.-% ~ 0.5 Gew.-%; |
| Lichtstabilisator | 0.1 Gew.-% ~ 0.6 Gew.-%; |
| Schwarzes Masterbatch | 0.5 Gew.-% ~ 5 Gew.-%; |
wobei die Summe der obigen Komponenten 100 Gew.-% beträgt.

2. Das hocheffiziente Lasermarkierungsmaterial nach Anspruch 1, **dadurch gekennzeichnet, dass** das HDPE-Harz bei 190 °C und 2.16 kg vorliegt und eine Schmelzflussrate des HDPE-Harzes nicht mehr als 10.0 g/10 min beträgt.

3. Das hocheffiziente Lasermarkierungsmaterial nach Anspruch 1, **dadurch gekennzeichnet, dass** das LLDPE-Harz bei 190 °C und 2.16 kg vorliegt und eine Schmelzflussrate des HDPE-Harzes nicht mehr als 2.0 g/10 min beträgt.

4. Das hocheffiziente Lasermarkierungsmaterial nach Anspruch 1, **dadurch gekennzeichnet, dass** das Schmiermittel aus einem oder mehreren von PE-Wachs, PPA, Silikon, PP-Wachs, Ölsäureamid, Erucasäureamid, Stearinsäure und EBS ausgewählt ist.

5. Das hocheffiziente Lasermarkierungsmaterial nach Anspruch 1, **dadurch gekennzeichnet, dass** das Antioxidans aus einem oder mehreren von Antioxidans 1010, Antioxidans 1076, Antioxidans 330, Antioxidans 168 und Antioxidans DLTP ausgewählt ist.

6. Das hocheffiziente Lasermarkierungsmaterial nach Anspruch 1, **dadurch gekennzeichnet, dass** der Lichtstabilisator aus einem oder mehreren von Lichtschutzmitteln, Lichtabsorbern und Radikalfängern ausgewählt ist.

7. Das hocheffiziente Lasermarkierungsmaterial nach Anspruch 6, **dadurch gekennzeichnet, dass** das Lichtschutzmittel aus Ruß und/oder Zinnoxid ausgewählt ist, der Lichtabsorber aus UV326 und/oder UV531 ausgewählt ist und der Radikalfänger aus Chimassorb UV944 ausgewählt ist.

8. Das hocheffiziente Lasermarkierungsmaterial nach Anspruch 1, **dadurch gekennzeichnet, dass** der Rußgehalt in dem hocheffizienten Lasermarkierungsmaterial nicht mehr als 2 Gew.-% beträgt; die Schmelzflussrate des hocheffizienten Lasermarkierungsmaterials nicht mehr als 2.0 g/10 min beträgt.

9. Ein Verfahren zur Herstellung eines hocheffizienten Lasermarkierungsmaterials nach Anspruch 1, **dadurch gekennzeichnet, dass** das Verfahren die folgenden Schritte umfasst:
A) Mischen von HDPE-Harz und LLDPE-Harz und Hinzufügen von Laseradditiven, Schmiermitteln, Antioxidantien, Lichtstabilisatoren und schwarzem Masterbatch zum Mischen, um eine Mischung zu erhalten;
B) Extrudieren der Mischung zu Pellets, um hocheffiziente Lasermarkierungsmaterialien zu erhalten.

10. Das Verfahren zur Herstellung eines hocheffizienten Lasermarkierungsmaterials nach Anspruch 9, **dadurch gekennzeichnet, dass** ein Doppelschneckenextruder für die Extrusionsgranulierung verwendet wird und eine Verarbeitungstechnologie des Doppelschneckenextruders Folgendes umfasst: die Temperatur von Bereich 1 210~225 °C in der ersten Zone, die Temperatur von Bereich 2 220~235 °C in der zweiten Zone, die Temperatur von Bereich 3 230~245 °C, die Temperatur von Bereich 4 240-255 °C, die Temperatur von Bereich 5 220~235 °C, die Temperatur von Bereich 6 230-245 °C, die Temperatur von Bereich 7 225~245 °C, die Temperatur von Bereich 8 220-235 °C, die Temperatur von Bereich 9 215~230 °C, die Temperatur von Bereich 10 195~210 °C; eine Schneckendrehzahl von 280-350 U/min und eine Tanktemperatur von 30-40 °C.

11. Das Verfahren zur Herstellung eines hocheffizienten Lasermarkierungsmaterials nach Anspruch 8, **dadurch gekennzeichnet, dass** das HDPE-Harz bei 190 °C und 2.16 kg vorliegt und eine Schmelzflussrate des HDPE-Harzes nicht mehr als 10.0 g/10 min beträgt.

12. Das Verfahren zur Herstellung eines hocheffizienten Lasermarkierungsmaterials nach Anspruch 8, **dadurch gekennzeichnet, dass** das LLDPE-Harz bei 190 °C und 2.16 kg vorliegt und eine Schmelzflussrate des HDPE-Harzes nicht mehr als 2.0 g/10 min beträgt.

13. Das Verfahren zur Herstellung eines hocheffizienten Lasermarkierungsmaterials nach Anspruch 8, **dadurch gekennzeichnet, dass** das Schmiermittel aus einem oder mehreren von PE-Wachs, PPA, Silikon, PP-Wachs, Ölsäureamid, Erucasäureamid, Stearinsäure und EBS ausgewählt ist.

14. Das Verfahren zur Herstellung eines hocheffizienten Lasermarkierungsmaterials nach Anspruch 8, **dadurch gekennzeichnet, dass** das Antioxidans aus einem oder mehreren von Antioxidans 1010, Antioxidans 1076, Antioxidans 330, Antioxidans 168 und Antioxidans DLTP ausgewählt ist.

15. Das Verfahren zur Herstellung eines hocheffizienten Lasermarkierungsmaterials nach Anspruch 8, **dadurch gekennzeichnet, dass** der Lichtstabilisator aus einem oder mehreren von Lichtschutzmitteln, Lichtabsorbern und Radikalfängern ausgewählt ist, das Lichtschutzmittel aus Ruß und/oder Zinnoxid ausgewählt ist, der Lichtabsorber aus UV326 und/oder UV531 ausgewählt ist und der Radikalfänger aus Chimassorb UV944 ausgewählt ist.

## Revendications

1. Un matériau de marquage laser hautement efficace, **caractérisé en ce que** le matériau de marquage laser hautement efficace est préparé à partir de matières premières comprenant les pourcentages en masse suivants:
| | |
|---|---|
| Résine PEHD: | 40 % en poids ~ 80 % en poids; |
| Résine PEBDL: | 20 % en poids ~ 60 % en poids; |
| Additif laser: | 0.3 % en poids ~ 1 % en poids, |
l'additif laser étant choisi parmi deux ou plusieurs matériaux sélectionnés dans le groupe constitué par l'oxyde ferroferrique et le phosphate de cuivre et de mica;
| | |
|---|---|
| Lubrifiant: | 0.2 % en poids ~ 1 % en poids; |
| Antioxydant: | 0.3 % en poids ~ 0.5 % en poids; |
| Stabilisateur de lumière: | 0.1 % en poids ~ 0.6 % en poids; |
| Mélange maître noir: | 0.5 % en poids ~ 5 % en poids; |
la somme des composants ci-dessus étant de 100 % en poids.

2. Le matériau de marquage laser hautement efficace selon la revendication 1, **caractérisé en ce que** la résine PEHD est à 190 °C et 2.16 kg, et qu'un indice de fluidité à chaud de la résine PEHD n'est pas supérieur à 10.0 g/10 min.

3. Le matériau de marquage laser hautement efficace selon la revendication 1, **caractérisé en ce que** la résine PEBDL est à 190 °C et 2.16 kg, et qu'un indice de fluidité à chaud de la résine PEHD n'est pas supérieur à 2.0 g/10 min.

4. Le matériau de marquage laser hautement efficace selon la revendication 1, **caractérisé en ce que** le lubrifiant est choisi parmi un ou plusieurs des éléments suivants: cire de PE, PPA, silicone, cire de PP, amide d'acide oléique, amide d'acide érucique, acide stéarique et EBS.

5. Le matériau de marquage laser hautement efficace selon la revendication 1, **caractérisé en ce que** l'antioxydant est choisi parmi un ou plusieurs des éléments suivants: antioxydant 1010, antioxydant 1076, antioxydant 330, antioxydant 168 et antioxydant DLTP.

6. Le matériau de marquage laser hautement efficace selon la revendication 1, **caractérisé en ce que** le stabilisateur de lumière est choisi parmi un ou plusieurs des éléments suivants: agents de protection contre la lumière, absorbeurs de lumière et agents de piégeage de radicaux libres.

7. Le matériau de marquage laser hautement efficace selon la revendication 6, **caractérisé en ce que** l'agent de protection contre la lumière est choisi parmi le noir de carbone et/ou l'oxyde d'étain, l'absorbeur de lumière est choisi parmi l'UV326 et/ou l'UV531, et l'agent de piégeage de radicaux libres est choisi parmi le Chimassorb UV944.

8. Le matériau de marquage laser hautement efficace selon la revendication 1, **caractérisé en ce que** la teneur en noir de carbone dans le matériau de marquage laser hautement efficace n'est pas supérieure à 2 % en poids; l'indice de fluidité à chaud du matériau de marquage laser hautement efficace n'est pas supérieur à 2.0 g/10 min.

9. Un procédé de préparation d'un matériau de marquage laser hautement efficace selon la revendication 1, **caractérisé en ce que** le procédé comprend les étapes suivantes:
A) mélanger la résine PEHD et la résine PEBDL, et ajouter des additifs laser, des lubrifiants, des antioxydants, des stabilisateurs de lumière et un mélange maître noir pour mélanger afin d'obtenir un mélange;
B) extruder le mélange sous forme de granulés pour obtenir des matériaux de marquage laser hautement efficaces.

10. Le procédé de préparation d'un matériau de marquage laser hautement efficace selon la revendication 9, **caractérisé en ce qu'**une extrudeuse à double vis est utilisée pour la granulation par extrusion, et qu'une technologie de traitement de l'extrudeuse à double vis comprend: la température du District 1 de 210-225 °C dans la première zone, la température du District 2 de 220-235 °C dans la deuxième zone, la température du District 3 de 230-245 °C, la température du District 4 de 240-255 °C, la température du District 5 de 220-235 °C, la température du District 6 de 230-245 °C, la température du District 7 de 225~245 °C, la température du District 8 de 220-235 °C, la température du District 9 de 215-230 °C, la température du District 10 de 195-210 °C; une vitesse de vis est de 280~350 tr/min, et une température de cuve est de 30~40 °C.

11. Le procédé de préparation d'un matériau de marquage laser hautement efficace selon la revendication 8, **caractérisé en ce que** la résine PEHD est à 190 °C et 2.16 kg, et qu'un indice de fluidité à chaud de la résine PEHD n'est pas supérieur à 10.0 g/10 min.

12. Le procédé de préparation d'un matériau de marquage laser hautement efficace selon la revendication 8, **caractérisé en ce que** la résine PEBDL est à 190 °C et 2.16 kg, et qu'un indice de fluidité à chaud de la résine PEHD n'est pas supérieur à 2.0 g/10 min.

13. Le procédé de préparation d'un matériau de marquage laser hautement efficace selon la revendication 8, **caractérisé en ce que** le lubrifiant est choisi parmi un ou plusieurs des éléments suivants: cire de PE, PPA, silicone, cire de PP, amide d'acide oléique, amide d'acide érucique, acide stéarique et EBS.

14. Le procédé de préparation d'un matériau de marquage laser hautement efficace selon la revendication 8, **caractérisé en ce que** l'antioxydant est choisi parmi un ou plusieurs des éléments suivants: antioxydant 1010, antioxydant 1076, antioxydant 330, antioxydant 168 et antioxydant DLTP.

15. Le procédé de préparation d'un matériau de marquage laser hautement efficace selon la revendication 8, **caractérisé en ce que** le stabilisateur de lumière est choisi parmi un ou plusieurs des éléments suivants: agents de protection contre la lumière, absorbeurs de lumière et agents de piégeage de radicaux libres, l'agent de protection contre la lumière est choisi parmi le noir de carbone et/ou l'oxyde d'étain, l'absorbeur de lumière est choisi parmi l'UV326 et/ou l'UV531, et l'agent de piégeage de radicaux libres est choisi parmi le Chimassorb UV944.
